Europäisches Patentamt

European Patent Office

Office européen des brevets

(11) Veröffentlichungsnummer: **0 216 087 B1**

(12) **EUROPÄISCHE PATENTSCHRIFT**

(45) Veröffentlichungstag der Patentschrift: **04.03.92**

(21) Anmeldenummer: **86110671.4**

(22) Anmeldetag: **01.08.86**

(51) Int. Cl.⁵: **G11B 15/10**, G11B 15/44

(54) **Einrichtung zur Steuerung eines Tonbandgerätes.**

(30) Priorität: **26.09.85 DE 3534290**

(43) Veröffentlichungstag der Anmeldung:
**01.04.87 Patentblatt 87/14**

(45) Bekanntmachung des Hinweises auf die
Patenterteilung:
**04.03.92 Patentblatt 92/10**

(84) Benannte Vertragsstaaten:
**DE FR GB**

(56) Entgegenhaltungen:
**DE-A- 2 721 286**
**DE-A- 2 942 349**
**GB-A- 2 148 043**

**PATENT ABSTRACTS OF JAPAN, Band 8, Nr.
179 (P-295)[1616], 17. August 1984; & JP-A-59
71 151 (CLARION K.K.) 21-04-1984**

**PATENT ABSTRACTS OF JAPAN, Band 8, Nr.
101 (P-273)[1538], 12. Mai 1984; & JP-A-59 11
572 (NIPPON TECHNICAL K.K.) 21-01-1984**

**PATENT ABSTRACTS OF JAPAN, Band 6, Nr.
162 (P-137)[1040], 25. August 1982; & JP-A-57
78 663 (COPAL K.K.) 17-05-1982**

(73) Patentinhaber: **GRUNDIG E.M.V. Elektro-
Mechanische Versuchsanstalt Max Grundig
holländ. Stiftung & Co. KG.
Kurgartenstrasse 37
W-8510 Fürth/Bay.(DE)**

(72) Erfinder: **Emmert, Reinhold
Reiherstrasse 14
W-8510 Fuerth(DE)**

**Beschreibung**

Die Erfindung betrifft eine Einrichtung zur Steuerung eines Tonbandgerätes, insbesondere Kassetten-Tonbandgerätes, die das Gerät vorwiegend in den Funktionen Start, Stop und Schnellauf durch Stromgabe, Stromunterbrechung und Stromumpolung (Laufrichtungsänderung) des Antriebsmotors steuert, der direkt oder mittels Riemen eine Tonwelle mit Schwungscheibe antreibt, mit einer auf einen federbelasteten Andruckhebel befindlichen Bandandruckrolle, die für den Bandtransport an die Tonwelle angedrückt wird, mit einem Zwischenrad, das auf einem zentrisch zu einem vom Motor angetriebenen Antriebsrad drehbar gelagerten Schwenkhebel angeordnet ist und das mit dem Antriebsrad in der Schwenkendstellung mit dem Auf- oder Abwickelspulenmitnehmer in Eingriff steht, wobei der Schwenkhebel beim Umschalten der Laufrichtung des Motors selbsttätig von der einen Endstellung in die andere in Stellung gebracht wird, und hierbei das Zwischenrad eine Rollbahn durchläuft.

Es sind Tonbandgeräte bekannt, die Teilfunktionen der Geräte durch Stromgabe, Stromunterbrechung und Stromumpolung des Antriebsmotors steuern. So ist aus der deutschen Patentschrift 828 923 und aus dem deutschen Gebrauchsmuster 1 738 790 eine Einrichtung zur Steuerung eines Tonbandgerätes aufgezeigt, bei denen das Umspulen des draht- oder bandförmigen Tonträgers durch Stromumpolung des Antriebsmotors gesteuert wird. Bei diesen bekannten Ausführungen wird vorwiegend ein Zwischenrad um ein Antriebsrad des Motors geschwenkt und gelangt abhängig von der Motorlaufrichtung mit dem Auf- oder Abwickelspulenmitnehmer in Eingriff. Hierzu ist das Zwischenrad vorzugsweise auf einem zentrisch zum Antriebsrad drehbar gelagerten Schwenkhebel angeordnet, wobei zwischen Schwenkhebel und Antriebsrad ständig ein Reibschluß besteht.

Diese bekannten Einrichtungen zur elektrisch beeinflußbaren Gerätesteuerung von Tonbandgeräten durch Laufrichtungsänderung des Antriebsmotors sind jedoch nicht in der Lage, gleichzeitig die unter hohem Federzug stehende Andruckrolle von der Tonwelle abzuheben oder an diese anzuschwenken.

Aus der deutschen Patentschrift 25 57 319 ist zwar eine Einrichtung bekannt, bei der zusätzlich zu der Laufrichtungsänderung auch die Andruckrolle durch Drehrichtungsänderung des Antriebsmotors mitsteuerbar ist, nachteilig ist hierbei jedoch, daß nicht zur Steuerung aller Gerätefunktionen, z. B. auch für den schnellen Geräterücklauf, eine einfache die Andruckrollenkraft überwindende erhöhte Schaltkraft einsetzbar ist.

Der Erfinder hat sich deshalb die Aufgabe gestellt, bei Geräten der eingangs näher bezeichneten Gattung diesen Nachteil zu beseitigen und eine Einrichtung zu schaffen, die in einfachster Weise durch Laufrichtungsänderung des Motors sowohl die Andruckrolle als auch alle übrigen Gerätefunktionen mit einer aus der Schwungscheibe entnehmbaren Energie zu steuern vermag.

Diese Aufgabe wird erfindungsgemäß durch die im Kennzeichen des Patentanspruchs 1 angegebenen Merkmale gelöst.

Die Erfindung wird nachfolgend anhand von Zeichnungen näher erläutert.

Fig. 1      ist eine schematische Darstellung der für die Erfindung wesentlichsten Teile eines Tonbandgerätes, wobei die Gerätefunktion - Stop - dargestellt ist,

Fig. 2 u.3    ist je eine schematische Darstellung ähnlich der Fig. 1, wobei die Gerätefunktionen - Schnellrücklauf - und - Schnellvorlauf - dargestellt sind.

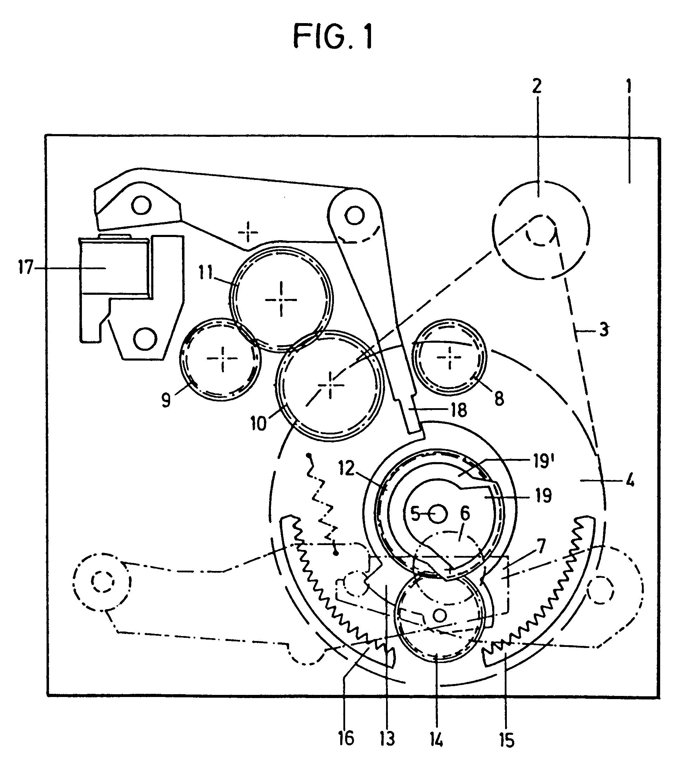

Die schematische Darstellung der Fig. 1 zeigt eine Chassisplatine 1 mit daran befestigtem Antriebsmotor 2, der mittels Riemen 3 die Schwungscheibe 4 antreibt. In die Schwungscheibe 4 ist eine Tonwelle 5 mit einem auf einer Seite frei über die Schwungscheibe hinausragenden Ende eingepreßt und dient gleichzeitig mit ihrem gegenüberliegenden Teil zur Wellenlagerung. An das freie Ende wird während des Gerätespielbetriebs (Start) ein nicht dargestelltes Tonband durch eine Andruckrolle 6, die auf einem Andruckhebel 7 gelagert ist, angedrückt. Weiterhin ist ein Aufwickelspulenmitnehmer 8 und ein Abwickelspulenmitnehmer 9 auf dem Chassis gelagert sowie zwei Zwischenräder 10, 11 auf der Abwickelspulenseite. Mit der Schwungscheibe direkt verbunden ist ein Antriebsrad 12 und ferner ist ein drehbarer Schwenkhebel 13 in Form einer Art Steuerscheibe zentrisch auf die Schwungscheibe 4 bzw. das Antriebsrad 12 aufgesteckt. Auf dem Schwenkhebel 13 ist unter Zwischenschaltung einer Friktionskupplung ein Zwischenrad 14 drehbar gelagert und steht in Eingriff zum Antriebsrad 12 der Schwungscheibe. In einen bestimmten Abstand zum Antriebsrad sind zwei kreisbogensegmentförmig geformte Rollbahnen 15, 16 auf dem Chassis angeordnet und umfassen teilweise das Antriebsrad 12. Das Zwischenrad 14 befindet sich nach Fig. 1 (Gerätefunktionsstellung Stop, vor Start) zwischen dem Anfang der beiden Rollbahnen 15 und 16. Ein auf dem Chassis angeordneter Elektromagnet 17 sperrt in der dargestellten Figur über eine Klinke 18 den Schwenkhebel 13 wenigstens in einer Drehrichtung. Auf dem Antriebsrad 12 sind mehrere Steuerkurven 19, 19' angeordnet, die der Steuerung verschiedener Geräteelemente dienen. So kann von der Drehrichtung des Antriebsrades und der Betätigung des Elektromagneten abhängig die Andruckrolle an die Tonwelle angeschwenkt oder abgehoben werden, und gleichzeitig kann ein nicht näher dargestelltes Zwischenrad über eine Steuerkurve zwischen Schwungscheibe und Aufwickelspulenmitnehmer für die Gerätefunktion Start (Aufnahme, Wiedergabe) eingerückt werden. Mittels Einfall oder Abheben der Klinke 18 kann der Schwenkhebel in verschiedenen Schwenklagen gestoppt oder aus diesen freigegeben werden.

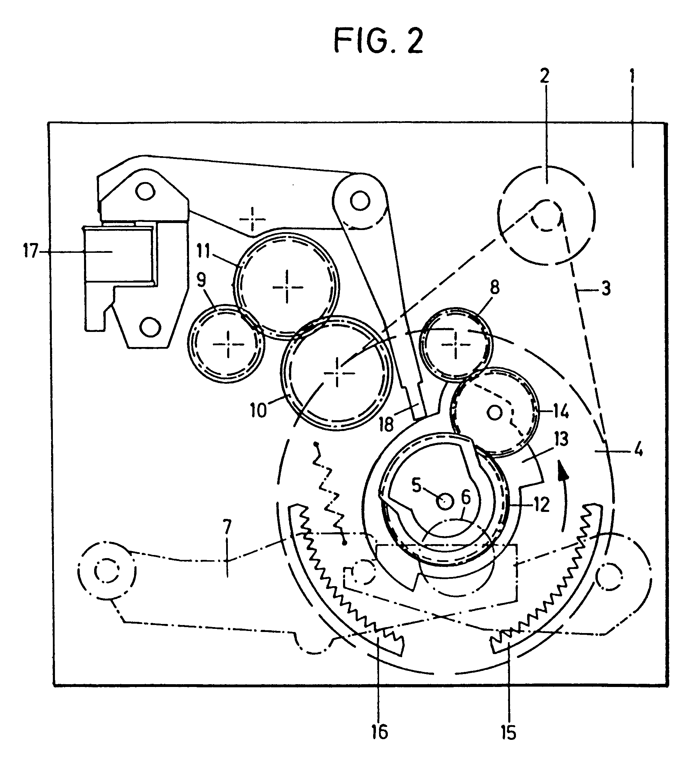

Die Fig. 2 zeigt den Gerätebetrieb - Schnellvorlauf -, wobei der Schwenkhebel 13 in Pfeilrichtung verschwenkt wurde nachdem der Magnet 17 über die Klinke 18 den Schwenkhebel freigegeben hat. Das Zwischenrad 14 hat hierbei die Rollbahn 15 durchlaufen. Bei diesem Vorgang wird über eine der Steuerkurven die Andruckrolle 6 von der Tonwelle 5 abgehoben. In der dargestellten Figur befindet sich das Zwischenrad 14 in seiner Endstellung und ist somit in Eingriff zum Aufwickelspulenmitnehmer 8.

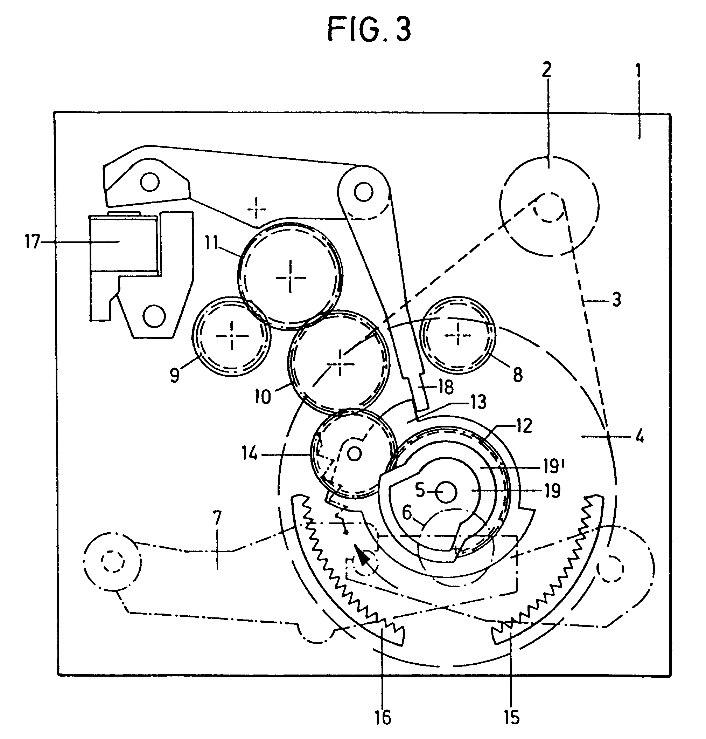

Aus der Fig. 3 ist die Lage des Zwischenrades 14 in der Geräteposition - Schnellrücklauf - zu erkennen. Nach Durchlauf des Zwischenrades 14 durch die Rollbahn 16 in Pfeilrichtung wird der Schwenkhebel 13 in die Lage gebracht, in der sich das Zwischenrad in Eingriff zu den übrigen mit dem Abwickelspulenmitnehmer 9 in Verbindung stehende Zwischenräder 10 und 11 befindet.

**Patentansprüche**

1. Einrichtung zur Steuerung eines Tonbandgerätes, insbesondere Kassetten-Tonbandgerätes, die das Gerät vorwiegend in den Funktionen Start, Stop und Schnellauf durch Stromgabe, Stromunterbrechung und - zwecks Laufrichtungsänderung - Stromumpolung des Antriebsmotors (2) steuert, der direkt oder mittels Riemen (3) eine Tonwelle (5) mit Schwungscheibe (4) antreibt, mit einer auf einem federbelasteten Andruckhebel (7) befindlichen Bandandruckrolle (6), die für den Bandtransport an die Tonwelle (5) angedrückt wird, mit einem Zwischenrad (14), das auf einem zentrisch zu einem vom Motor (2) angetriebenen Antriebsrad (12) drehbar gelagerten Schwenkhebel (13) bei Zwischenschaltung einer Friktionskupplung angeordnet ist, und das für die Gerätefunktion Schnellauf in den Schwenkendstellungen mit dem Antriebsrad (12) und dem Auf- oder Abwickelspulenmitnehmer (8, 9) in Eingriff steht, wobei der Schwenkhebel beim Umschalten der Laufrichtung des Motors (2) selbsttätig von der einen Endstellung in die andere Endstellung gebracht wird, und hierbei das Zwischenrad (14) eine Rollbahn durchläuft,

**dadurch gekennzeichnet,** daß zwei Rollbahnen (15, 16) das Antriebsrad (12) teilweise umfassen, daß das Zwischenrad (14) auf dem Schwenkhebel (13) in einer Ausgangsstellung zwischen dem Anfang beider Rollbahnen (15, 16) angeordnet ist, daß das Zwischenrad (14) durch Drehrichtungsänderung des Antriebsrades (12) abwechselnd die eine oder andere Rollbahn (15, 16) durchläuft und mit dieser in Eingriff steht, daß der Schwenkhebel (13) als drehbare, zentrisch um das Antriebsrad (12) angeordnete Steuerscheibe ausgeführt ist, die verschiedene Steuerkurven (19, 19') und Sperrnasen aufweist, die auf die Bandandruckrolle (6) einwirken und ein zweites Zwischenrad zwischen Schwungscheibe (4) und Aufwickelspulenmitnehmer (8) für die Gerätefunktion Start einrücken können, und daß der Schwenkhebel (13) in seiner Ausgangsstellung und bedarfsweise Endstellung oder vor einer Endstellung durch eine von einem Elektromagneten (17) betätigbare Klinke (18) gehalten ist.

2. Einrichtung nach Anspruch 1,
   **dadurch gekennzeichnet,** daß der Eingriff des Zwischenrades (14) zum Antriebsrad (12) und zu den beiden Rollbahnen (15, 16) formschlüssig über eine Verzahnung erfolgt.

**Claims**

1. Device for controlling an audio tape apparatus, in particular a cassette audio tape apparatus, which controls the apparatus predominantly in the functions of start, stop and fast running by supplying, interrupting and - for the purpose of changing the running direction - reversing the polarity of the current to the drive motor (2), which drives a capstan (5) with flywheel (4) directly or by means of a belt (3), having a tape pinch roller (6), which is located on a spring-loaded pressing lever (7) and is pressed against the capstan (5) for tape transport, having an intermediate wheel (14), which is arranged with a friction clutch interposed on a pivoted lever (13) rotatably mounted centrally with respect to a drive wheel (12) driven by the motor (2), and which is in engagement in the pivoted end positions with the drive wheel (12) and the take-up or supply reel driver (8, 9) for the apparatus function of fast running, the pivoted lever being brought automatically from the one end position into the other end position upon switching-over of the running direction of the motor (2), and the intermediate wheel hereby (14) running around a race, characterised in that two races (15, 16) partly surround the drive wheel (12), in that, in a starting position, the intermediate wheel (14) on the pivoted lever (13) is arranged between the beginning of the two races (15, 16), in that, by changing the direction of rotation of the drive wheel (12), the intermediate wheel (14) alternately runs around the one or other race (15, 16) and is in engagement with it, in that the pivoted lever (13) is designed as a rotatable cam plate arranged centrally about the drive wheel (12) and has various control cams (19, 19') and blocking lugs, which act on the tape pinch roller (6) and can move a second intermediate wheel between flywheel (4) and take-up reel driver (8) for the apparatus function Start, and in that the pivoted lever (13) is held in its starting position and, if need be, end position or before an end position by a pawl (18) which can be actuated by an electromagnet (17).

2. Device according to Claim 1, characterised in that the engagement of the intermediate wheel (14) with the drive wheel (12) and with the two races (15, 16) takes place positively by means of a serration.

## Revendications

1. Dispositif de commande d'un appareil à bande audio, appareil à cassette notamment, qui commande l'appareil principalement dans les fonctions de marche, d'arrêt et de défilement rapide par fourniture du courant, coupure du courant et, afin de modifier la direction de défilement, inversion de la polarité du courant du moteur d'entraînement (2) qui, directement ou par l'intermédiaire de courroies (3), entraîne un arbre principal (5) pourvu d'un volant d'inertie (4), le dispositif comportant un galet presseur de bande (6) qui se trouve sur un levier de pression (7) chargé par ressort et qui est pressé contre l'arbre principal (5) en vue du transport de la bande, et une roue intermédiaire (14), qui est disposée, avec intercalation d'un accouplement à friction, sur un levier pivotant (13) monté en rotation de manière centrée par rapport à une roue d'entraînement (12) entraînée par le moteur (2), et qui, pour la fonction de défilement rapide de l'appareil, est en prise dans les positions finales de pivotement avec la roue d'entraînement (12) et avec l'entraîneur de bobine réceptrice ou l'entraîneur de bobine débitrice (8,9), le levier pivotant étant automatiquement amené d'une position finale à l'autre en inversant le sens de marche du moteur (2), et la roue intermédiaire (14) parcourant alors une voie de roulement, **caractérisé** en ce que deux voies de roulement (15,16) entourent partiellement la roue d'entraînement (12), en ce que la roue intermédiaire (14) est, dans une position d'origine, disposée sur le levier pivotant (13) entre le début des deux voies de roulement (15,16), en ce que la roue intermédiaire (14), en modifiant la direction de rotation de la roue d'entraînement (12), parcourt alternativement l'une ou l'autre des voies de roulement (15,16) et est en prise avec cette voie, en ce que le levier pivotant (13) est réalisé sous la forme d'un disque de commande rotatif, qui est disposé de manière centrée autour de la roue d'entraînement (12) et qui présente différentes cames de commande (19,19') et ergots de blocage, qui agissent sur le galet presseur de bande (6) et peuvent mettre en prise une deuxième roue intermédiaire entre le volant d'inertie (4) et l'entraîneur de bobine réceptrice (8) pour la fonction de marche de l'appareil, et en ce que le levier pivotant (13) est maintenu dans sa position d'origine et, en cas de besoin, dans ou avant une position finale, par un cliquet (18) pouvant être actionné par un électro-aimant (17).

2. Dispositif selon la revendication 1, caractérisé en ce que la roue intermédiaire (14) est en prise avec la roue d'entraînement (12) et avec les deux voies de roulement (15,16) par un engagement positif, obtenu par endentement.

# FIG. 1

# FIG. 2

# FIG. 3